# EUROPÄISCHE PATENTANMELDUNG

(11) **EP 0 884 661 A2**
(43) Veröffentlichungstag der Anmeldung: **16.12.1998**
(21) Anmeldenummer: 98110515.8
(22) Anmeldetag: 09.06.1998
(51) Int. Cl.: G04B 47/00, G04B 19/12

(54) **Kleinuhr mit Transponder**

(30) Priorität: 13.06.1997 DE 19724708
(71) Anmelder: Junghans Uhren GmbH, 78713 Schramberg (DE)
(72) Erfinder: Schaffer, Holger, Dipl.-Ing., 77761 Schiltach (DE); Lechner, Thomas, Dr.-Ing., 78144 Tennenbronn (DE)
(74) Vertreter: Hofmann, Gerhard, Dipl.-Ing. Patentassessor

(57) **Zusammenfassung**

Eine herkömmliche Kleinuhr (11) wird ohne das Erfordernis, bei der Gehäusekonstruktion gesonderte Aufnahme-Freiräume einplanen oder sich auf im Verhältnis zum Gehäusedurchmesser kleine Werke beschränken zu müssen, noch nachträglich zur Transponder-Kleinuhr (11) umgestaltbar, wenn sie bei der Montage anstelle mit einem normalen Zifferblatt mit einem Transponder-Zifferblatt (12) ausgestattet wird, nämlich mit einem Zifferblatt (12), in dem oder hinter dem die Antennenspule (14) samt direkt angeschlossenem Schaltkreis (15) eines passiven Transponders (13) angeordnet ist. Die Spule 14 wird vorzugsweise zu benachbarten elektrisch leitenden Teilen der Uhr (11) hin - also zum daruntergelegenen elektromotorisch angetriebenen Zeigerwerk oder zu einem umgebenden metallischen Gehäuse hin - magnetisch abgeschirmt, um die wirksamen Antennen-Reichweite zu erhöhen.

## Beschreibung

Die Erfindung betrifft eine Kleinuhr, insbesondere Armbanduhr, gemäß dem Oberbegriff des Anspruches 1.

Eine solche Transponder-Kleinuhr ist etwa als 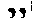 Skidata-Keywatch" (vgl. DIALOG Heft 2/1991 Seite 33) oder als 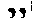 Swatch Access" auf dem Markt. Sie dient z.B. als Berechtigungsausweis und Fernsteuermittel etwa zum Öffnen von Türen bzw. als elektronisches Abbuchungskonto für Abrechnungssysteme wie etwa zur Benutzung von Skiliften, Parkgaragen und ähnlichem. Der dort passive Transponder besteht im wesentlichen aus einer flachen und schmalen Ringspule, an deren Spulenenden ein Transponder-Schaltkreis mit integriertem Speicher und Modulator sowie erforderlichenfalls ein Resonanzkondensator angeschlossen sind. Die Spule wirkt als kernlose Antenne für ein Koppelfeld, das ein Sender im induktiv an den Transponder gekoppelten Abfragegerät mit einer Frequenz generiert, die bei eingeführten Transpondersystemen typischerweise im Übergangsbereich zwischen dem Mittelwellen- und dem Langwellen-Frequenzbereich bei 125 kHz), aber auch im Kurzwellenbereich (bei 13,56 MHz) liegt.

Wie in der EP 0 582 137 A2 und in der EP 0 258 415 B als solches näher beschrieben nimmt die auf jenes Hochfrequenzfeld auf Resonanz abgestimmte oder definiert dagegen verstimmte Antennenspule des Transponders bei hinreichender induktiver Kopplung, also bei hinreichender gegenseitiger Annäherung zwischen Transponder und Abfragegerät, genügend Hochfrequenzenergie auf um für das Auslesen (und ggf. auch für ein Beschreiben) des Transponder-Speicherschaltkreises die erforderliche Betriebsspannung zur Verfügung zu stellen. Die mit dieser Energie aus dem Speicher ausgelesene Binärinformation steuert einen Transponder-Modulator, der die Transponder-Antenne im Rhythmus dieser Information bedämpft und somit dem im Abfragegerät generierten Hochfrequenzfeld Energie entzieht. Das ist im Abfragegerät als Amplitudenmodulation detektierbar, zu dem auf diese Weise die aus dem Transponder-Speicher abgerufene Information drahtlos übermittelt wird, ohne die Energiequelle für den Betrieb der Kleinuhr selbst dafür belasten zu müssen.

Bei marktgängigen derartigen Transponder-Kleinuhren ist z.B. zwischen dem Boden eines Kunststoff-Uhrgehäuses und dem darin aufgenommenen Werk mit Batterie für einen zeithaltenden elektromotorischen Zeigerantrieb ein flachzylindrischer Hohlraum ausgespart, in den der Transponder, also die Spule mit angeschlossenen, Chip, eingelegt werden kann. Das bedingt allerdings die Einplanung eines solchen Anfnahmeraumes für den Transponder schon bei der Konstruktion und Herstellung der Uhr. Andererseits wäre es aus logistischen und absatzpolitischen Gründen wünschenswert, je nach dem hinsichtlich der Uhrgehäuse-Ausgestaltung gegebenen Geschmack des aktuell potentiellen Abnehmerkreises auch nachträglich noch und kurzfristig umdisponieren und eine gefragte herkömmliche Kleinuhren-Modellserie als Transponder-Uhren ausstatten sowie ausliefern zu können, auch wenn das bei der Gehäusekonstruktion seinerzeit noch gar nicht vorgesehen worden war. Deshalb wird bei einer Transponder-Armbanduhr mit Kunststoffgehäuse gewöhnlich die Transponder-Antennenspule ringförmig um das Uhrwerk herumgelegt. Das bedingt für nomale Gehäusedurchmesser ein kleines Werk und somit den Verzicht auf eine Datumsanzeige.

Deshalb liegt vorliegender Erfindung die technische Problemstellung zugrunde, eine Transponder-Kleinuhr gattungsgemäßer Art derart auszulegen, daß konstruktive Hindernisse gegen die nachträgliche Ausstattung einer herkömmlichen Kleinuhr mit einem passiven Transponder der beschriebenen Art selbst angesichts der Vorgabe eines im Verhältnis zum Uhrgehäuse-Durchmesser großen Werkes möglichst überwunden sind.

Diese Aufgabe ist erfindungsgemäß im wesentlichen durch die Merkmale gemäß der Kombination im Hauptanspruch erfüllt. Jener Lösung zufolge braucht die hinsichtlich ihrer Komponenten auf Lager gehaltene Uhr bei der Endmontage lediglich je nach aktueller Anforderung als herkömmliche oder als Transponder-Kleinuhr mit einem preiswerten, üblichen Zifferblatt oder mit dem technisch aufwendigeren Transponder-Zifferblatt ausgestattet zu werden.

Unter dem Transponder-Zifferblatt ist im Rahmen vorliegender Erfindung also eine unmittelbare, integrale Ausstattung des Uhren-Zifferblattes selbst mit dem vollständigen passiven Transponder aus flacher Ringspule und Schaltungs-Chip (sowie erforderlichenfalls einem Abstimmkondensator) zu verstehen. Dabei kann dieser Transponder separat gefertigt und unter ein herkömmliches nichtmetallisches Zifferblatt geklebt sein. Der Transponder kann aber auch in ein Zifferblatt eingespritzt sein; oder es ist ein Laminat-Aufbau vorgesehen, bei dem der Transponder zwischen einer sichtseitig die Minuterie aufweisenden Dekorschicht und einer Zifferblatt-Grundplatte eingeschlossen (eingeklebt oder eingeformt) ist; wofür vorzugsweise Polykarbonat als Trägermaterial eingesetzt wird, weil das sich gut zur Aufnahe von Dekordrucken eignet und weil das sich andererseits bereits bei der Herstellung von kontaktlosen Chipkarten bewährt hat. Es kann im Rahmen vorliegender Erfindung aber auch vorgesehen sein, die Antennenspule als gedruckte Schaltung auf einer als Zifferblatt-Dekorträger dienenden Schaltungsplatine auszubilden. Insbesondere kann bei einer auf die Zifferblatt-Grundplatte gedruckten Spule im Interesse möglichst großer Antennen-Reichweite eine Entkopplung der Spulen-Windungen gegeneinander in dem Sinne erfolgen, daß aufeinanderfolgende Windungs-Leiterbahnen auf jeweils einander gegenüberliegenden Seiten der Trägerplatte verlaufen; wie in der eigenen EP 0 769 759 A2 näher beschrieben, worauf hier voll-inhaltlich Bezug genommen wird. Wenn wenigstens ein Teil der aufkaschierten spiralförmigen Leiterbahnenführung ganz oder teilweise auf der Sicht- oder Glasseite des Zifferblattes verläuft, erhält diese zweckmäßigerweise noch als mechanischen Schutz und optische Kaschierung eine Dekor-Deckschicht, die dann ihrerseits erst die Minuterie-Symbole trägt.

In allen Fällen ist durch die erfindungsgemäße Lösung der Vorteil erreicht, daß nun praktisch jede Uhr, unabhängig vom Material ihres Gehäuses, auch ohne konstruktive Berücksichtigung eines Antennen-Aufnahmefreiraumes nachträglich noch, bei der Endmontage, zur Transponder-Kleinuhr umfunktioniert werden kann, indem einfach anstelle des normalen ein wie oben beschrieben ausgestattetes Transponder-Zifferblatt eingelegt wird. Das braucht nicht dicker zu sein, als ein herkömmliches Zifferblatt Wenn das neue Transponder-Zifferblatt eventuell dennoch (etwa infolge Schichtenaufbaus für einen einlaminierten Transponder, oder infolge gedruckter Leiterbahnen zur Ausbildung der Antennenspule) eine etwas größere Stärke aufweist, dann stört das bei hinreichender Zeigerwellenlänge die Montage im Regelfalle nicht, weil dann lediglich das auf den Zifferblatt-Rand oder gegen einen auf diesem aufliegenden Stützring anliegende haubenförmige Uhrglas beim Verkleben oder beim Verschweißen mit der Gehäusewand nicht ganz so tief in das topf- oder ringförmige Kleinuhrengehäuse hineintaucht. Das erfindungsgemäße Transponder-Zifferblatt kann aber auch statt der am Rand umlaufenden Festlegung unter dem Uhrglas mit rückwärtigen Steckstiften zur Montage auf dem anderweitig im Gehäuse gehalterten Uhrwerk ausgestattet sein.

Eine weitere Steigerung der Antennenleistung, also des für hinreichende induktive Kopplung zwischen den Antennenspulen im Abfragefeld noch überbrückbaren Abstandes, ergibt sich, wenn hinter diesem Transponder-Zifferblatt und somit vor dem darunter angeordneten Uhrwerk eine elektromagnetische Abschirm- und Leitschicht vorgesehen wird, wie in unserer heutigen Parallelanmeldung näher beschrieben, auf die zur Ergänzung der Offenbarung dieser Erfindungs-Weiterbildung voll-inhaltlich Bezug genommen wird.

Aus der CH 686 107 GA3 ist eine gattungsähnliche, nämliche aktive Transponder-Kleinuhr bekannt, bei welcher die Rückseite einer unter dem Zifferblatt gelegenen Trägerplatte für das Uhrwerk in der Projektion außerhalb des Uhrwerks mit einer U-förmig im Bogen verlaufenden einlagigen Leiterbahnenschleife kaschiert ist. Die dient als Sendeantenne des aktiven Transponders, dessen Schaltung unter der von der Trägerplatte aufgenommenen Leiterbahn befestigt ist. Für eine nachträgliche Umrüstung der Kleinuhr zu solcher Transponder-Kleinuhr müßte das Werk erst von seiner Trägerplatte demontiert werden, um es unter eine Trägerplatte mit aktivem Transponder neu zu montieren und dabei die Sendeeinrichtung des Transponders an die Energieversorgung des Werkes anzuschließen - was ersichtlich ganz erheblichen logistischen Zusatzaufwand gegenüber der vorliegenden erfindungsgemäßen Lösung bedingt, einfach bei der Schlußmontage der Uhr bedarfsweise auf ein herkömmliches oder auf ein Transponder-Zifferblatt zuzugreifen.

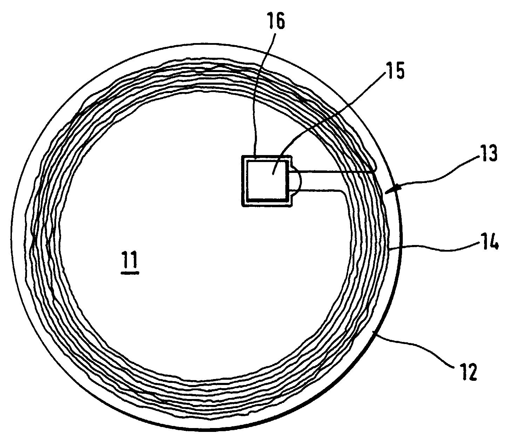

Der prinzipielle Aufbau eines Transponder-Zifferblattes für die erfindungsgemäß ausgestattete Transponder-Kleinuhr ist in der Zeichnung skizziert:

Die einzige Figur der Zeichnung zeigt ohne Darstellung des Uhrgehäuses einer Kleinuhr 11 - in der Querschnittsebene zwischen vom Uhrgehäuse aufgenommenem Zifferblatt 12 und Uhrwerk von angenähert gleichen Durchmessern - einen Blick gegen die rückwärtige oder untere Seite des Zifferblattes 12, das unmittelbar einen Transponder 13 aus kernloser Ring-Antennenspule 14 und an ihre Spulenenden angeschlossenem Schaltkreis 15 aufweist. Der Schaltkreis 15 ist an sich kaum stärker, als die axiale Abmessung der Spule 14, trägt aber insbesondere dann etwas auf wenn er im Bereich des Anschlusses an die beiden Spulen-Drahtenden oder an die auf einer Leiterplatte gedruckten Spiralbahnen vergossen wird. Er taucht deshalb zur Reduzierung der effektiven Bauhöhe wenigstens teilweise in eine entsprechende Aussparung 16 in das Zifferblatt-Material ein.

Eine herkömmliche Kleinuhr mit grundsätzlich beliebigen Uhrgehäuse wird so ohne das Erfordernis, bei der Gehäusekonstruktion gesonderte Aufnahme-Freiräume einplanen zu müssen, noch nachträglich zur Transponder-Kleinuhr 11 umgestaltbar, indem sie bei der Endmontage anstelle mit einem normalen Zifferblatt mit einem Transponder-Zifferblatt 12 ausgestattet wird, nämlich mit einem Zifferblatt 12, in dem oder hinter dem die Antennenspule 14 und der Schaltkreis 15 eines passiven Transponders 13 angeordnet und vorzugsweise zum daruntergelegenen elektromotorisch angetriebenen Zeigerwerk der Uhr 11 hin elektrisch und magnetisch abgeschirmt sind.

Eine herkömmliche Kleinuhr 11 wird nach vorliegender Erfindung also ohne das Erfordernis, bei der Gehäusekonstruktion gesonderte Aufnahme-Freiräume einplanen oder sich auf im Verhältnis zum Gehäusedurchmesser kleine Werke beschränken zu müssen, noch nachträglich zur Transponder-Kleinuhr 11 umgestaltbar, wenn sie bei der Montage anstelle mit einem normalen Zifferblatt mit einem Transponder-Zifferblatt 12 ausgestattet wird, nämlich mit einem Zifferblatt 12, in dem oder hinter dem die Antennenspule 14 samt direkt angeschlossenem Schaltkreis 15 eines passiven Transponders 13 angeordnet ist. Die Spule 14 wird vorzugsweise zu benachbarten elektrisch leitenden Teilen der Uhr 11 hin - also zum daruntergelegenen elektromotorisch angetriebenen Zeigerwerk oder zu einem umgebenden metallischen Gehäuse hin - magnetisch abgeschirmt, um die wirksamen Antennen-Reichweite zu erhöhen.

## Patentansprüche

1. Kleinuhr (11), insbesondere Armbanduhr, mit an eine flache ringförmige Antennenspule (14) angeschlossenem Schaltkreis (15) eines insbesondere passiven Transponders (13),
**dadurch gekennzeichnet**,
daß das Kleinuhren-Zifferblatt (12) selbst Träger des Transponders (13) ist.

2. Kleinuhr nach Anspruch 1,
**dadurch gekennzeichnet**,
daß das Zifferblatt (12) auf seiner der Sichtseite gegenüberliegenden Rückseite den Transponder (13) trägt.

3. Kleinuhr nach Anspruch 1,
**dadurch gekennzeichnet**,
daß der Transponder (13) in das Zifferblatt (12) eingespritzt oder in ein mehrschichtiges Zifferblatt (12) einlaminiert ist.

4. Kleinuhr nach Anspruch 1,
**dadurch gekennzeichnet**,
daß das Zifferblatt (12) als Leiterplatte für spiralförmig verlaufende aufkaschierte Leiterbahnen als der Antennenspule (14) ausgelegt ist.

5. Kleinuhr nach Anspruch 4,
**dadurch gekennzeichnet**,
daß in der Projektion nebeneinanderliegende Windungen der Spule (14) jeweils auf abwechselnden Seiten einer Leiterplatte verlaufen und an ihren Enden durch diese hindurch miteinander in Serie geschaltet sind.

6. Kleinuhr nach Anspruch 4 oder 5,
**dadurch gekennzeichnet**,
daß sichtseitig auf dem Zifferblatt (12) verlaufende Leiter der Antennenspule (14) durch eine Dekor-Kaschierung abgedeckt sind.

7. Kleinuhr nach einem der vorangehenden Ansprüche,
**dadurch gekennzeichnet**,
daß im Zifferblatt (12) eine Ausnehmung (16) vorgesehen ist, in welche der Schaltkreis (15) oder ein ihn überwölbender Verguß hineinragt.

8. Kleinuhr nach einem der vorangehenden Ansprüche,
**dadurch gekennzeichnet**,
daß das Zifferblatt (12) wenigstens eine Scheibe aus Polykarbonat aufweist.

9. Kleinuhr nach einem der vorangehenden Ansprüche,
**dadurch gekennzeichnet**,
daß das Zifferblatt (12) zum Werk hin durch eine die Kontur des Werkes überragende magnetische Abschirmung von geringer elektrischer Leitfähigkeit hinterlegt ist.

10. Kleinuhr nach einem der vorangehenden Ansprüche,
**dadurch gekennzeichnet**,
daß die Peripherie des Zifferblattes (12) zu einem umgebenden elektrisch leitenden Uhrgehäuse hin durch einen Ring aus hochpermeablem Material umgeben ist.
